Europäisches Patentamt

European Patent Office

Office européen des brevets

(19)

(11) Numéro de publication: **0 048 781 B1**

(12) **FASCICULE DE BREVET EUROPEEN**

(45) Date de publication du fascicule du brevet:
27.03.85

(51) Int. Cl.⁴: **G 06 F 13/42**, G 06 F 13/00

(21) Numéro de dépôt: 80430018.4

(22) Date de dépôt: 26.09.80

(54) Adaptateur de lignes de communication destiné à un contrôleur de communications.

(43) Date de publication de la demande:
07.04.82 Bulletin 82/14

(45) Mention de la délivrance du brevet:
27.03.85 Bulletin 85/13

(84) Etats contractants désignés:
DE FR GB IT

(56) Documents cités:
FR - A - 2 162 371
US - A - 3 623 010
US - A - 3 842 405
US - A - 4 016 548
US - A - 4 075 691
US - A - 4 188 665

IBM TECHNICAL DISCLOSURE BULLETIN, vol. 21, no. 7, décembre 1978, NEW YORK (US) NAGEL et al.: "Programmable communications subsystem having controller incorporating microprocessor", pages 2633-2645

(73) Titulaire: **International Business Machines Corporation, Old Orchard Road, Armonk, N.Y. 10504 (US)**
(84) Etats contractants désignés: **DE GB IT**

(73) Titulaire: **Compagnie IBM FRANCE, 5 Place Vendôme, F-75000 Paris 1er (FR)**
(84) Etats contractants désignés: **FR**

(72) Inventeur: **Calvignac, Jean Louis Joseph, Les Vallières, F-06610 La Gaude (FR)**
Inventeur: **Castel, René Robert Francis, L'Espeyrade Route des Valettes -Sud, Tourrettes-Sur-Loup F-06140 Vence (FR)**

(74) Mandataire: **Lattard, Nicole, Compagnie IBM France Département de Propriété Industrielle, F-06610 La Gaude (FR)**

**0 048 781**

## Description

La présente invention concerne dans un contrôleur de communications, un adaptateur de lignes de communication permettant de prendre en compte les différents protocoles des communication qui régissent la transmission de données sur les lignes ainsi que les différentes vitesses de transmission possibles.

Les contrôleurs de communications (cf. par exemple US-A-4 188 665) sont des dispositifs destinés à être incorporés dans une installation de télétraitement de données, de manière à gérer les transmissions sur les différentes lignes qui y sont rattachées. Généralement, la commande principale du réseau de télétraitement est concentrée dans une ou plusieurs unités de traitement centrales CPU contenant un répertoire des règles de traitement des données provenant de ou se dirigeant vers les stations terminales ou terminaux du réseau de télétraitement. L'envoi et la réception des données au travers des lignes de transmission sont gérés par des contrôleurs de communications placés sous la dépendance de la ou des unités centrales CPU. Mais outre l'exécution de commandes de transmission au sens strict du terme, le contrôleur est chargé d'exécuter des fonctions du répertoire, notamment des fonctions relevant directement des procédures standard de transmission. De ce fait, les unités centrales CPU sont libérées des tâches correspondantes et peuvent se consacrer à l'exécution d'autres travaux.

Le contrôleur de communications est un ensemble complexe ayant une intelligence qui est en majorité concentrée dans une ou plusieurs unités de commande centrales CCU. Les unités de commande centrales sont reliées d'une part aux terminaux au travers d'adaptateurs de lignes et d'autre part aux unités de traitement centrales CPU au travers d'adaptateurs de canaux ainsi désignés en raison du fait qu'ils sont connectés aux canaux de la ou des unités de traitement centrales.

Les adaptateurs de lignes peuvent desservir un certain nombre de lignes de transmission au moyen d'un dispositif de balayage cyclique, et d'un ensemble de mémoires à accès aléatoire, dans lesquelles sont stockés temporairement, les données reçues ou devant être envoyées sur les différentes lignes sous contrôle du dispositif de balayage.

Dans un tel environnement, chaque adaptateur de lignes peut être connecté à des lignes envoyant et recevant des informations de terminaux de différents types et en conséquence les protocoles et les vitesses de transmission des données sont différents. Pour qu'un réseau de communication de données présente un maximum de souplesse, il faut que les différentes lignes puissent supporter tous les protocoles de transmission. Ainsi on peut réaliser n'importe quelle configuration de réseau.

Généralement, chaque ligne est associée à un circuit d'adaptateur particulier dont la conception dépend du protocole de transmission des données sur la ligne. Il est bien évident que cette solution est coûteuse et manque de souplesse, car lorsque l'on veut changer la configuration du réseau, il faut changer les circuits d'adaptation.

Une autre solution consisterait à gérer les protocoles de communication uniquement par microprogramme. Cette solution offre une très grande souplesse mais n'est pas satisfaisante car la réalisation de certaines fonctions par microprogramme demande un temps bien plus grand que leur réalisation par des circuits appropriés. En conséquence une telle solution ne permet pas d'atteindre des performances élevées.

Un objet de la présente invention est donc de réaliser un circuit d'adaptation de lignes qui permette d'obtenir une souplesse maximum pour la réalisation d'un réseau de télétraitement.

Un autre objet de la présente invention est de réaliser un tel circuit d'adaptation qui permette de conserver les caractéristiques de vitesse de traitement.

Conformément à la présente invention telle que revendiquée chaque adaptateur de lignes est divisé en deux parties. Une première partie est organisée autour d'un microprocesseur et d'un ensemble de mémoires. Le microprocesseur assure la gestion des données envoyées par l'unité de commande centrale CCU vers les lignes par l'intermédiaire des circuits du dispositif de balayage dans la seconde partie et vice versa. L'ensemble de mémoires joue le rôle de tampon entre l'unité de commande centrale et le dispositif de balayage.

La seconde partie est organisée autour du dispositif de balayage et permet le contrôle des lignes de communication. Cette partie reçoit ou transmet les données sur les lignes par l'intermédiaire d'un modem ou non suivant le type de lignes, longue distance ou courte distance et d'un circuit d'interface. Le circuit de balayage comprend des moyens pour désérialiser les données reçues et sérialiser les données à transmettre. Dans ce dispositif de balayage les données sont stockées dans des mémoires à accès aléatoire. Sous contrôle d'un dispositif de sélection d'adresse, le balayage des lignes est effectué en explorant cycliquement les positions mémoire.

L'échange des informations entre les mémoires du dispositif de balayage et le microprocesseur se fait par l'intermédiaire des registres externes du microprocesseur et par vol de cycle directement dans la mémoire de contrôle du microprocesseur.

L'interface entre les deux parties comprend trois trajets d'échange. Le premier trajet d'éntrée/sortie est un trajet asynchrone utilisé essentiellement au cours du mode d'initialisation afin de personnaliser les mémoires du dispositif de balayage sous contrôle du microcode en fonction des caractéristiques de lignes. Un second trajet est utilisé pour effectuer des demandes d'interruption, et un troisième

2

trajet est utilisé pour l'échange des données par vol de cycle entre les mémoires du dispositif de balayage et la mémoire de commande du microprocesseur, sous le contrôle du dispositif de balayage.

D'autres objets, caractéristiques et avantages de la présente invention ressortiront mieux de l'exposé qui suit, fait en référence aux dessins annexés à ce texte, qui représentent un mode de réalisation préféré de celle-ci.

La figure 1 représente le schéma global d'un système dans lequel peut être incorporer la présente invention (LA1, LA2, LAn).

La figure 2 représente le schéma d'un adaptateur de lignes conforme à la présente invention.

La figure 3 représente les registres externes utilisés dans l'opération asynchrone d'initialisation.

La figure 4 représente la disposition d'une zone mémoire LIB et de la zone »paramètre-état« qui lui est associé dans la mémoire de commande du microprocesseur.

La figure 5 représente les registres externes qui sont utilisés dans le processus de demande d'interruption.

La figure 6 représente les éléments du circuit d'interface de lignes associées à une liaison.

La figure 7 représente le contenu d'une zone mémoire LIB et de la zone paramètre-état associée pour une opération de transmission.

La figure 8 représente le contenu d'une zone mémoire LIB et de la zone paramètre-état associée pour une opération de réception.

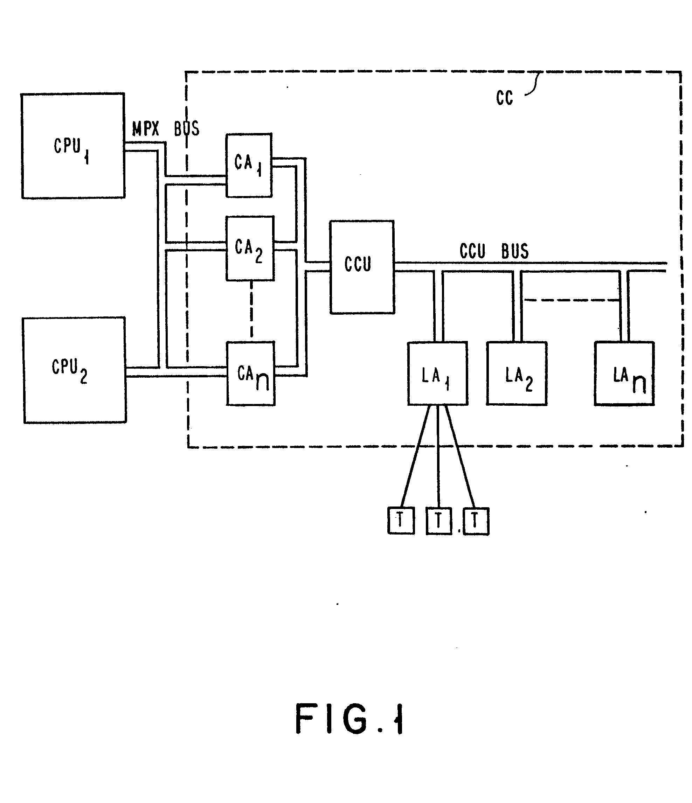

En référence à la figure 1 on va décrire à titre d'exemple le schéma global d'un système dans lequel peut être incorporée la présente invention. Le contrôleur de communication CC est un élément d'un réseau de télétraitement dont on peut trouver un exemple de configuration dans l'ouvrage »Téléinformatique« par G. Macchi et J. E. Guilbert, notamment au chapitre 10. Dans le contrôleur de communication l'unité centrale de commande CCU gère les données transitant entre les terminaux T et des unités centrales de traitement CPU1 et CPU2. L'unité CCU est reliée à des canaux multiplex MPX bus des unités centrales de traitement CPU1 et CPU2 au travers d'adaptateurs de canaux CA1, ..., CAn. Elle est aussi reliée aux terminaux T au travers d'adaptateurs de lignes LA1, ... ,LAn connectées à un bus CCU Bus.

Dans un tel environnement la présente invention concerne la réalisation des adaptateurs de lignes, réalisation qui est modulaire, c'est-à-dire que le même adaptateur peut être utilisé quel que soient les protocoles et vitesses de transmission sur les lignes auxquelles il est connecté.

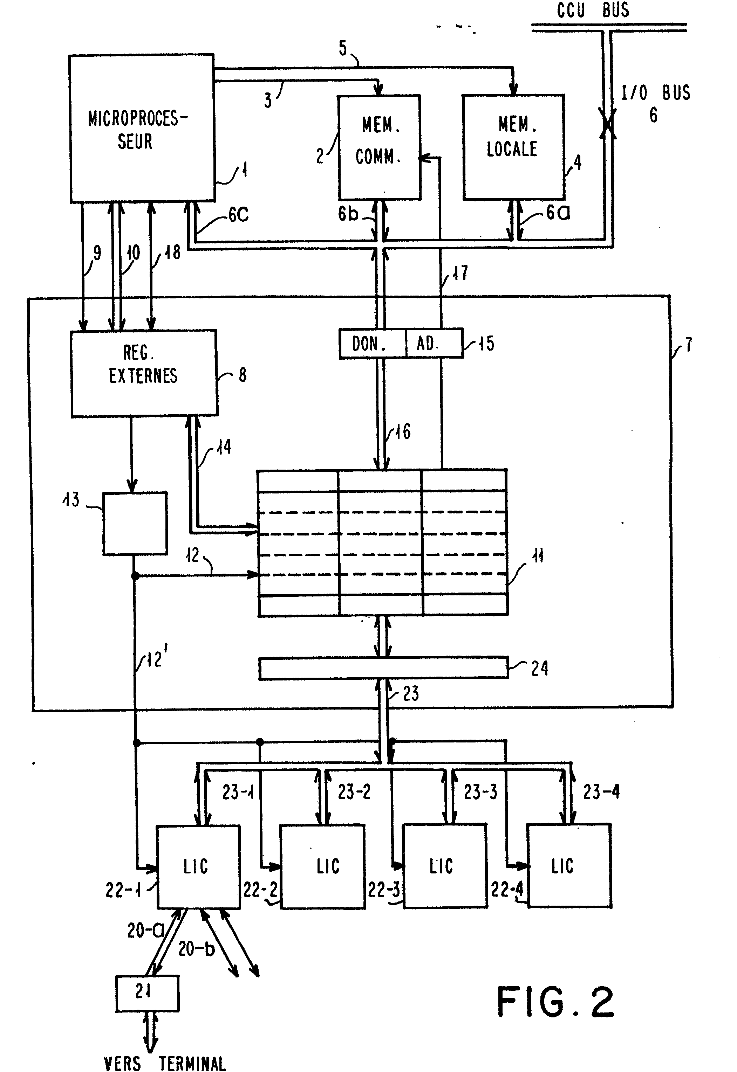

La figure 2 représente de façon schématique un adaptateur conforme à la présente invention. Il comprend un microprocesseur 1 associé à une mémoire de commande 2 comportant un espace pour l'emmagasinage du microcode de commande du microprocesseur et un espace pour l'emmagasinage de données. Cette mémoire est adressée par le microprocesseur par le chemin d'adressage 3. Le microprocesseur est aussi associe à une mémoire locale 4 qu'il adresse par le chemin d'adressage 5. Le bus d'entrée/sortie, I/O Bus 6 assure le transit des informations entre le CCU Bus du système de télétraitement et l'adaptateur de lignes par des opérations initialisées par programme (PIO) et des opérations initialisées par l'adaptateur (AIO). Le bus 6 est connecté à la mémoire locale 4 par un bus 6a, à la mémoire de commande par un bus 6b et au microprocesseur par un bus 6c.

Un dispositif de balayage de lignes 7 est connecté à l'ensemble microprocesseur-mémoires. Sur la figure 2, n'ont été représentés que les éléments essentiels pour comprendre la présente invention.

Des registres externes 8 qui peuvent être adressés par le microprocesseur par le chemin d'adressage 9, permettent au microprocesseur de communiquer avec le dispositif 7 par des opérations d'écriture ou de lecture dans les registres 8. Ils sont écrits ou lus par le bus 10.

Un ensemble de mémoires à accès aléatoire 11, est divisé en plusieurs zones, chaque zone étant associée à une ligne de communication. Cet ensemble est adressé par le chemin 12 par l'intermédiaire d'un dispositif de sélection d'adresse 13. Comme on le verra par la suite, suivant le mode de fonctionnement, les adresses sont forcées par le contenu des registres externes 8 ou elles sont établies par le dispositif 13 lui-même pour contrôler l'opération de balayage des lignes.

Le bus 14 permet de transférer des informations des registres externes à l'ensemble de mémoire 11 ou vice-versa.

L'ensemble 11 communique avec la mémoire 2 du microprocesseur en mode connu sous le nom »vol de cycle« de façon à échanger les informations entre une zone de la mémoire 11 sélectionnée par le dispositif 13 et une position de la memoire de commande sélectionnée par l'information d'adresse placée dans un registre d'entrée/sortie 15 comportant une partie adresse et une partie données. Les données sont échangées par le bus 16 et l'adressage de la mémoire est réalisé par le chemin 17. Un chemin d'interruption 18 est aussi prévu pour interrompre le microprocesseur dans certaines conditions reportées dans un des registres externes.

L'adaptateur est relié aux liaisons de communication, une liaison comportant deux lignes 20-a et 20-b, si elle est bi-directionelle, et une ligne si elle est uni-directionnelle, pour recevoir et transmettre les informations vers le terminal éventuellement par l'intermédiaire d'un modem 21. Des circuits d'interfaces de lignes LIC, 22-1 à 22-4 sont placés entre le dispositif de balayage 7 et les lignes. Ces circuits d'interfaces sont connectés à l'ensemble de mémoires 11 par des bus 23-1 à 23-4 respectivement. Il comprend des circuits d'attaque et de réception de ligne, et des registres pour stocker temporairement les bits de données reçus ou à transmettre sur les lignes auxquelles ils sont connectés. Les registres sont adressés sous contrôle du dispositif 13, par le chemin d'adressage 12'.

Les circuits d'interface de lignes LIC traitant les informations sous forme série, et le dispositif de balayage 7 et le microprocesseur travaillant sur des multiplets de 8 bits, il faut prévoir un circuit logique 24 placé sur le bus 23 pour assurer la sérialisation des données en transmission et la désérialisation en réception ainsi que d'autres fonctions logiques en connexion avec les mémoires.

Les données peuvent être reçues ou transmises suivant différents protocoles par exemple SDLC (Synchronous Data Link Control), BSC (Binary Synchronous Communication) et arythmique S/S (Start/ Stop). Pour chacun des différents protocoles on définit des paramètres de transmission tels que longueur de caractères pour les protocoles S/S et BSC, longueur du code arrêt pour le protocole S/S, longueur et type des caractères de contrôle CRC, etc. Un exemple de définition des paramètres sera donné par la suite.

La communication entre le dispositif de balayage et le microprocesseur se fait suivant deux modes: un mode asynchrone qui implique l'intervention du microcode stocké dans la mémoire 2 et un mode synchrone indépendant du microcode.

Le mode asynchron est utilisé pour réaliser trois types d'opérations.

## 1. Phase d'initialisation

La phase d'initialisation, est la phase au cours de laquelle a lieu la définition d'un réseau de télétraitement. Le système étant placé dans le mode d'initialisation, les paramètres caractéristiques de chaque ligne du réseau sont stockés sous contrôle du microcode dans la mémoire 11 par une procédure qui sera décrite par la suite. Pour cela, chaque zone de positions mémoire affectée à chaque ligne particulière reçoit par l'intermédiaire des registres externes, dans un champ donné, les paramètres d'initialisation caractérisant la ligne. Les champs restants sont affectés au stockage des données, de leurs paramètres de contrôle et de leurs informations d'état caractérisant les conditions d'achèvement d'un échange de données. Au cours de cette phase, l'ensemble de mémoire 11 est personnalisé en fonction de la configuration.

## 2. Gestion des fils d'interface avec le modem

Les fils d'interface (non représentés sur la figure 2) sont associés aux lignes 20-a, 20-b, sur ces fils transitent les signaux de contrôle de la liaison. Pour traiter les signaux de contrôle sur ces fils il n'est pas nécessaire d'avoir des performances optimum mais un maximum de souplesse est souhaitable de façon à pouvoir gérer différents types de modems et de procédures qui sont connus actuellement ou qui pourraient être développés dans le futur.

Les informations de commande allant au modem sont envoyées par le microcode en mode asynchron au moyen des dispositifs 10, 9 et registres 8 et sont également stockées dans un registre que l'on appelera »modem sortie«. A chaque période de balayage de la ligne correspondante la configuration sur ces fils est comparée avec la configuration sur les circuits d'attaque de ligne obtenue par des circuits de réception locaux par l'intermédiaire d'un masque déterminé par le microcode. Tout désaccord entre les deux configurations engendre une condition d'erreur »Vérification circuits d'attaque«. Ainsi on vérifie les circuits d'attaque du modem concerné.

A chaque période de balayage, les informations sur les fils venant du modem sont stockées dans un registre »modem entrée« et sont comparées avec les informations »modem entrée« conservées dans la zone de mémoire 11 correspondante. Cette opération de comparaison est déclenchée par le microcode et est réalisée par l'intermédiaire d'un masque déterminé par le microcode. Un désaccord entre les deux configurations engendre une demande d'interruption et interrompt la comparaison jusqu'à ce que le microcode la reprenne. Ceci empêche que plusieurs interruptions se produisent dans le cas d'un changement permanent sur des fils de contrôle du modem dû à des conditions d'erreurs erratiques.

## 3. Traitement des demandes d'interruption

Le mode synchrone est utilisé pour le transfert d'informations par vol de cycle directement dans la mémoire de commande 2 du microprocesseur par le chemin 16 et le registre 15. Les informations: données, paramètres de contrôle, informations d'état associées sont transférées depuis/dans la mémoire 2 sans intervention du microcode.

La partie de la mémoire 2 réservée à cet effet a été divisé en zones mémoires LIB, und zone étant affectée à chaque ligne.

L'échange de données par vol de cycle est une opération bien connue, elle est réalisée par l'intermédiaire de commandes générées par le microprocesseur 1. Le dispositif 7 peut accéder à la mémoire 2 lorsque le microprocesseur a répondu à une demande de vol de cycle par un signal »vol de cycle accordé«. Ensuite l'adresse dans la mémoire 2 de la zone à laquelle l'operation de transfert doit avoir lieu est fournie à la partie adresse du registre 15. L'adressage de la mémoire 2 est réalisé par le chemin 17 et le transfert des données par le bus 16.

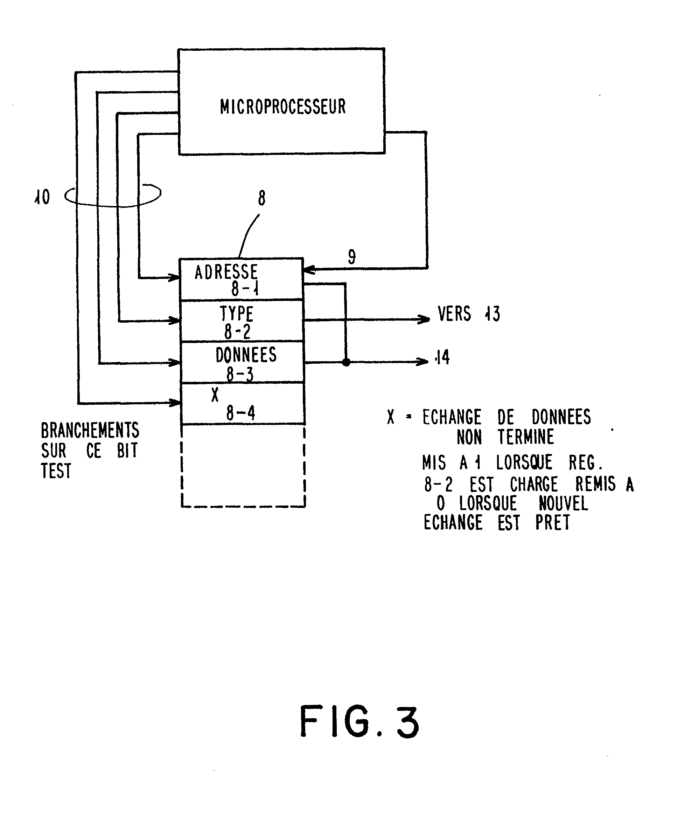

On va maintenant décrire en référence à la figure 3 comment se fait l'operation d'initialisation. Dans

## 0 048 781

ce mode de fonctionnement le microprocesseur communique au dispositif de balayage 7 les informations du mode d'initialisation précédemment fournies au microprocesseur par l'unité de commande centrale CCU, en exécutant des instructions d'écriture dans les registres externes.

Pour cette opération, quatre registres externes 8-1, 8-2, 8-3 et 8-4 sont nécessaires. Dans le registre 8-1 le microcode provoque le chargement de l'adresse de la ligne (par exemple 20-a) pour laquelle l'opération d'initialisation a lieu. Successivement chaque ligne pourra être traitée suivant le même processus.

Dans le registre 8-2, le microcode provoque le chargement de l'adresse dans l'ensemble de mémoire 11 à laquelle les paramètres d'initialisation doivent être écrits et dans le registre 8-3 les paramètres d'initialisation proprement dits.

Les formats des paramètres d'initialisation sont les suivants, ces formats sont donnés à titre d'exemple et il est bien évident que si d'autres protocoles ou mode de transmission venaient à être utilisés, d'autres paramètres pourraient être définis.

Chaque paramètre comporte 8 bits de 0 à 7. Lorsque la ligne est une ligne d'émission (telle que 20-b) les bits 0 à 7 ont la signification suivante:

### Bits 0, 1, 2

| | | | |
|--|--|--|--|
| 1 | 0 | 1 | ligne S/S |
| 1 | 1 | 0 | ligne SDLC sans interruption au premier fanion |
| 1 | 1 | 1 | ligne SDLC avec interruption au premier fanion |
| 1 | 0 | 0 | ligne BSC commandée par code |
| 0 | 0 | . | ligne BSC / ASCII |
| | | | (ASCII = American National Standard Code for information Interchange) |
| 0 | 1 | . | ligne BSC / EBCDIC |
| | | | EBCDIC = |

### Bit 3

Ce bit n'est pas utilisé en modes S/S et SDLC. En mode BSC il est utilisé de la façon suivante:

BSC       interface standard type X21 si le bit 3 est à 1.
BSC ASCII / EBCDIC le bit 3 doit être pris en considération avec le bit 2.

| | | |
|--|--|--|
| 0 | 0 | le caractère ITB (fin de bloc intermédiaire) n'est pas un caractère de controle. |
| 1 | 0 | mode EIB (EIB bloc d'information d'erreur) |
| 0 | 1 | mode ITB |
| 1 | 1 | mode EIB + changement de bloc. |

### Bit 4

Suivant le protocole ce bit signifie:

S/S       longueur du code arrêt
          0 = 1 bit    1 = 2 bits
SDLC      code NRZI si égal à 1
BSC       par code bit non utilisé
BSC ASCII / EBCDIC le bit 4 est à prendre en considération avec le bit suivant.

### Bit 5

Ce bit n'est pas utilisé pour les protocoles S/S et SDCL. Pour le protocole BSC il est utilisé de la manière suivante:

BSC       par code si 1 signifie mono SYNC
BSC ASCII / EBCDIC en conjonction avec le bit 4 indique le type de contrôle d'erreur.

| | | |
|--|--|--|
| 1 | 0 | CRC S (CRC = Cyclic Redundancy Checking) |
| 0 | 1 | CRC B |
| 0 | 0 | CRC B ou S / STX pris en compte dans CRC |
| 1 | 1 | LRC / VRC |

LRC = Longitudinal Redundancy Checking
VRC = Vertical Redundancy Checking (en langue anglaise).

5

Bits 6 et 7

Pour les protocoles S/S, BSC par code, ces deux bits donnent la longueur de caractère:

00      5 bits/caractère
01      6 bits/caractère
10      7 bits/caractère
11      8 bits/caractère

Lorsque la ligne est une ligne de réception, la définition des bits est la même que précédemment.

Pour le protocole S/S, les bits de départ et d'arrêt ne sont pas pris en compte dans la définition de la longueur de caractère, ils sont supprimés du train de bits envoyé par le terminal pour recevoir des caractères de données purs.

De plus, pour une ligne BSC de réception, il faut fournir la configuration des caractères de synchronisation et pour une ligne BSC d'émission, la configuration du caractère de synchronisation à insérer chaque seconde.

Du fait de la division de la mémoire de commande 2 en zones mémoire LIB associées à chaque ligne assurant le stockage temporaire des données dans l'opération d'échange par vol de cycle, il faut aussi fournir une adresse de départ déterminant quelle zone mémoire LIB est affectée à la ligne. Le format de cette adresse sera donné par la suite lors de la description de l'arrangement des zones mémoire LIB dans la mémoire 2.

Les échanges de données ont lieu par octet. Un registre externe supplémentaire 8-4 est utilisé pour connaître la fin et le résultat de l'échange.

Un bit de ce registre externe 8-4 est manipulé par le dispositif de balayage de la façon suivante:

Il est mis à 1 lorsque le registre 8-2 est chargé et il est remis à zéro lorsqu'un nouvel échange de données peut avoir lieu concernant une nouvelle ligne et que les données sont placées dans le bon emplacement.

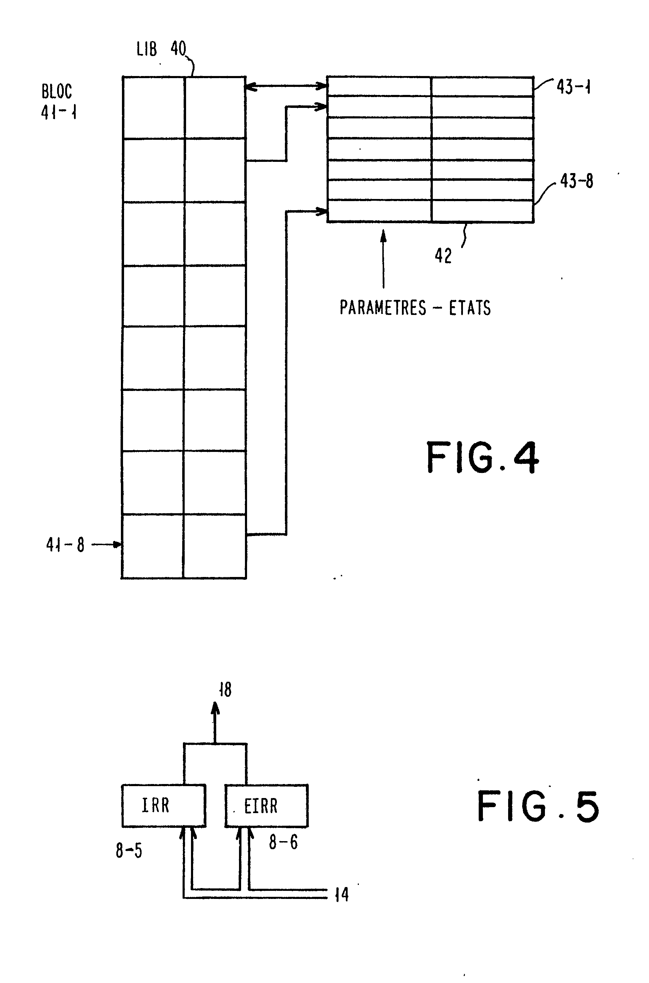

On va maintenant décrire en référence à la figure 4, l'arrangement de la partie de la mémoire de commande 2 réservé à l'échange des données en vol de cycle par le chemin synchrone, bus 16, registre 15 de la figure 2.

La mémoire 2 est divisée en zones mémoire LIB telle que 40 sur la figure 4. Une zone LIB est affectée à chaque ligne de communication. Il y a dans la mémoire 2 autant de zones LIB qu'il y a de lignes gérées par l'adaptateur.

Du fait de la structure des données, les zones LIB sont divisées en blocs contenant 8 octets. Pour les protocoles SDLC et BSC, les données sont précédées et suivies de caractères de replissage et de caractères de contrôle. En mode réception de données SDLC, plusieurs trames peuvent être reçues et les données doivent être chargées séparément pour identifier ces différentes trames. C'est ce qui a conduit à la subdivision des zones LIB 40 en blocs 41. La zone 40 a été représentée divisée en 8 blocs 41-1 à 41-8. Un bloc complet pourra être transféré sans interruption du microcode.

A chaque zone LIB est associée une zone de mémoire »Paramètres Etats« 42 utilisés pour le stockage de paramètres de commande et d'information d'état. A chaque bloc 41 est affecté un bloc 43 de la zone 42, par exemple le bloc 41-1 est associé au bloc 43-1 et le bloc 41-8 est associé au bloc 43-8. Chaque bloc 43 permet de stocker deux octets.

Avant d'utiliser un bloc les paramètres de commande associés dont la définition sera donnée par la suite sont transférés par le microcode dans la zone 43 appropriée et à la fin du traitement d'un bloc de données, l'information d'état est transférée par le dispositif de balayage 7 dans le bloc 43 et vient remplacer les paramètres.

Le microcode n'est interrompu à la fin du traitement d'un bloc de données que si cela est requis par les paramètres. Ainsi on peut envoyer le message avec une seule interruption à la fin du message, ou le microcode n'est interrompu qu'une fois qu'une quantité prédéterminée de données a été traité par le dispositif 7 pour obtenir ou envoyer des données supplémentaires de/à l'unité centrale CCU.

En mode réception un message est terminé lorsque le caractère de commande de fin est détecté. L'information de fin est une information d'état. En BSC le microcode vérifie le dernier caractère du bloc pour identifier le caractère de fin (ETB, ETX, ENQ).

La capacité de stockage des zones LIB, peut être déterminée suivant le protocole de la ligne correspondante, la dimension des messages et la vitesse sur la ligne. La dimension d'une zone LIB peut varier de 64 à 256 octets et la capacité de stockage dans un bloc peut varier de 1 à 8 octets.

Les différentes zones LIB sont affectées à chaque ligne au mode d'initialisation au moyen de la donnée »adresse de départ« qui est écrite dans la mémoire 1. Cette donnée a le format suivant:

Les deux premiers bits donnent la longueur de la zone LIB en nombre de blocs, un bit suivant indique, s'il est à 0 qu'il s'agit de l'adress d'une zone LIB, pour passer à la zone »Paramètre-Etats« 42, il est mis à 1. Les bits restants sont des bits d'adresse.

Cette information d'adresse de départ est utilisée pour réaliser l'adressage de la mémoire 2 par l'intermédiaire du chemin 17 et pour connaître à quels emplacements doivent avoir lieu les opérations de transfert en vol de cycle.

Les commandes sont envoyées par le microcode de commande au dispositif 7 afin de commencer ou d'arrêter la transmission des données sur une ligne »Emission« telle que 20-b ou la réception des données sur une ligne réception telle que 20-a. Ces commandes sont envoyées à la ligne appropriée en utilisant le trajet asynchron; registres externes 8, bus 11 et en envoyant à la mémoire 11 les paramètres de commande.

On va maintenant donner à titre d'exemple une définition du champ des paramètres et des informations d'état pouvant être utilisés.

### Définition du Champ Paramètre

. Ligne »Emission«

Ce champ comporte 16 bits de 0 à 15, les bits ayant la signification suivante:

| | |
|---|---|
| Bit 0 | bloc valide (bloc peut être transmis. Ce bit indique que le bloc de données associé contient des données à envoyer. Il est mis à zéro par le microcode de commande et mis à un pour le disposition de balayage lorsque l'information d'état est échangée. |
| Bit 0 | = 0 bloc valide |
| Bit 0 | = 1 bloc non valide) |
| Bit 1 | commencer transmission des données. |
| Bit 2 | Interruption demandée. Ce bit oblige le dispositif 7 à faire une demande d'interruption par l'intermédiaire d'un registre externe et de la ligne 18 lorsque le dernier caractère du bloc a été envoyé à la mémoire 11 dans la position appropriée correspondant à cette ligne. |
| Bits 5, 6, 7 | nombre d'octets de données dans le bloc. Ces bits indiquent le nombre de multiplets à prendre de ce bloc (de 1 à 8 multiplets en partant du début du bloc). |
| Bit 8 | envoyer CRC (valable pour le protocole SDLC). Ce bit siginifie qu'à la fin du bloc le CRC accumulé [CRC mode de contrôle d'erreur: Cyclic redundancy Checking] doit être envoyé. |
| Bit 9 | commencer sur octet impair. Si ce bit est à 1 le dispositif de balayage agit comme si le premier multiplet (mulitplet 0) du bloc était déjà traité (ceci permet de commencer sur le second multiplet: multiplet 1, impair.) |
| Bits 11, 12 | Si »00« données intermédiaires |
| | Si »01« dernière données, fin de message EOM. |
| | Dans ce cas le dispositif 7 envoie le bloc complet. Lorsque le dernier bit du dernier caractère à envoyer a été transmis au modem, le dispositif 7 interrompt le code de commande et arrête la transmission (EOT). |
| | Si 1 0 continuer à transmettre ces données en permanence (boucle). |
| | Lorsque les dernières données du bloc ont été lues, le dispositif de balayage revient aux premières données. |
| | Si 1 1 fin de message avec reprise (turn around) |
| | même opération que précédemment (01) mais la ligne est mise automatiquement en mode début réception au temps EOT (fin de transmission). |
| Bit 13 | Pas d'insertion de zéro dans ces données, pas d'accumulation CRC (SDLC)ou transmission interrompue (S/S). Ce bit demande que le dispositif 7 ne réalise pas d'insertion de zéro pour tous les multiplets de données compris dans ce bloc. |
| Bit 14 | démarrer dispositif mesure de temps. |
| Bit 15 | envoyer contenu registre »Modem-sortie« à la fin du bloc. |

. Ligne »Réception«

Seuls huit bits sont utilisés dans le champ paramètre de commande.

| | |
|---|---|
| Bit 0 | bloc valide (bloc prêt à recevoir des données, les données peuvent être envoyées par le dispositif 7. Il est mis à zéro par le microcode de commande et mis à un par le dispositif de balayage lorsque l'information d'état est échangée. |
| Bit 0 | = 0 bloc valide |
| Bit 0 | = 1 bloc non valide) |
| Bit 1 | commencer réception des données |
| Bit 2 | faire une demande d'interruption à la fin du bloc. |
| Bits 5, 6, 7 | nombre de multiplets maximum à mettre dans ce bloc. |

### Définition du champ information d'état

Ligne »Emission«

Bit 0 = 1, bloc valide.

Ce bit signifie que les données contenues dans ce bloc ont été envoyées et que le bloc peut être ré-utilisé par le microcode de commande pour mettre d'autres données.

Bit 2 une interruption avait été demandée par le code de commande (via paramètres).

Bits 5, 6, 7 compte de données transmises.

Bit 10 caractère manquant

Bit 11 changement contenu Registre »Modem-entrée«. Ce bit indique qu'un changement du contenu du registre »modem-entrée« s'est produit pendant le traitement de ce bloc. Une information d'état est immédiatement envoyée et une interruption est immédiatement demandée.

Bit 12 = EOT (fin de transmission. Ce bit est mis à 1 si le dispositif de balayage 7 a traité un bloc avec une information de fin de message (EOM) dans le champ de paramètre correspondant.

Ligne »Réception«

Bit 0 bloc valide.

Le dispositif de balayage 7 met ce bit à 1 lorsque l'information d'état est transférée par vol de cycle afin d'informer le code de commande que le bloc associé a été remple. Les données peuvent être utilisées par le microcode de commande.

Bit 2 une interruption a été demandée par le code de commande par l'intermédiaire des paramètres.

Bits 5, 6, 7 compte des données reçues dans ce bloc.

Bits 8, 12, 13 si 000 données intermédiaires

si 001 fin de réception sans erreur de vérification CRC,

101 fin de réception avec erreur de vérification CRC.

011 limite fanion mal cadrée

100 abandon (le message commencé est mauvais, ne pas le prendre en compte.

110 état inactif (la ligne est retombée dans un état de repos).

Bits 9, 10 si 10 service normal

si 11 caractère perdu (débordement).

Les zones LIB, 40, sont utilisées pour empiler les données transitant entre l'unité de commande CCU et le dispositif de balayage 7 pour empêcher les conditions de débordement de caractères et demande de caractère et pour réguler le flot des données sur la ligne.

Pour une opération sur une ligne émission les données doivent être transférées de l'unité de commande CCU au dispositif de balayage dans la zone de mémoire 11 associée et à la ligne. Inversement pour une opération de réception les données doivent être transférées de la ligne de réception dans la zone de mémoire 11 associée à la ligne, et ensuite envoyées à l'unité CCU.

Les données donc prises dans l'unité CCU et amenées dans la zone LIB appropriée (opération de transmission) ou déplacées des zones LIB dans l'unité CCU (opération de réception) 16 multiplets à la fois par des opérations AIO initialisées par l'adaptateur (microcode de commande).

Les données sont lues et transférées des zones LIB dans la mémoire 11 (opération de transmission) ou de la mémoire 11 aux zones LIB (opération de réception) deux multiplets à la fois par des opérations en vol de cycle, initialisées par le dispositif de balayage.

Pour chaque bloc de données échangé entre une zone LIB et la mémoire 11, les deux multiplets correspondants de paramètres fournissent à la mémoire 11 des informations concernant les données dans ce bloc ou les données à mettre dans ce bloc, quelle action doit être effectuée par le dispositif de balayage à la fin du bloc telle que: interruption du microcode, . . .

La condition fin de bloc permet au dispositif 7 de transférer les 2 octets d'information d'état qui viennent remplacer les deux octets de paramètres associés à ce bloc et d'interrompre le microcode si nécessaire.

Des demandes d'interruption sont soit faites par le microcode par l'intermédiaire des paramètres soit faites par le dispositif 7, en cas de condition de fin de transfert de données anormales.

Pour cela deux registres sont prévus dans les registres externes 8. Ces registres sont représentés schématiquement sur la figure 5. Le dispositif de balayage 7 identifie et envoie l'adresse de la ligne pour laquelle la demande d'interruption est faite dans le registre externe de demande d'interruption IRR 8-5 et la raison de la demande d'interruption soit dans le registre IRR 8-5 soit dans le registre EIRR 8-6.

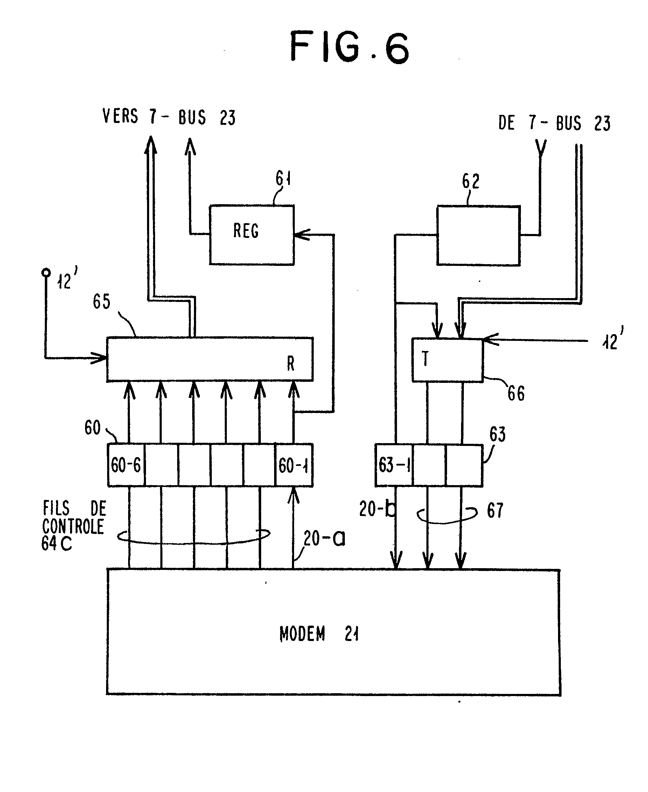

On va maintenant décrire en référence à la figure 6 comment est gérée l'information présente sur les fils de contrôle associés aux lignes d'émission et de réception 20-b et 20-a respectivement. Les éléments représentés sur la figure 6 permettent la gestion d'une liaison réception-émission en connexion avec un modem 21. En conséquence, dans un circuit LIC il y a autant de ces éléments qu'il peut y

**0 048 781**

avoir de liaisons qui leur sont connectées.

Certains de ces fils transmettent de l'information de contrôle venant du modem et d'autres transmettent de l'information de contrôle allant au modem. La signification de ces informations dépend du type d'interface standard utilisé par exemple CCITT V 24 ou V 25.

On a donc deux types d'information de contrôle, le premier sera appelé »information entrée« en provenance du modem et le second »information sortie« allant vers le modem.

Les signaux reçus sur la ligne 20-a sont transmis à un récepteur 60-1 dans un ensemble de circuits, 60, un récepteur étant associé à la ligne et à chaque fil de contrôle. Ensuite ils sont envoyés au dispositif de balayage 7 par le bus 23 par l'intermédiaire d'un registre REG 61. Les signaux à émettre sur la ligne 20-b sont reçus de la mémoire 11 par l'intermédiaire du bus 23. Ils sont stockés dans un registre intermédiaire REG 62 et envoyés sur la ligne par un circuit d'attaque 63-1 dans un ensemble de circuit 63, un circuit d'attaque étant associé à la ligne et à chaque fil de contrôle.

L'information sur les fils de contrôle venant du modem 64, information modem-entrée est emmagasinée dans un registre »modem entrée« 65. Ce registre peut être adressé de la même façon qu'une position de la mémoire 11 par la ligne 12'. Le dispositif de balayage vient chercher l'information contenue dans ce registre chaque fois que la ligne est balayée et l'emmagasine dans la partie de la mémoire 11 associée à cette ligne pour détecter les changements d'état des fils de contrôle conformément au code fourni par le microprocesseur par l'intermédiaire de configurations de masquage.

Inversement, l'information à transmettre à un modem »information modem sortie« est générée par le microcode et placée dans une position »modem-sortie« de la mémoire 11 associée à cette ligne en utilisant le chemin asynchrone, 9, 10 registres externes. Lorsque la ligne est balayée, le circuit logique 24 transfère les données »modem-sortie« au registre »modem-sortie« 66. Les fils de contrôle »information modem-sortie«, 67, sont pris à la sortie du registre 66.

L'information modem-entrée est traitée de la façon suivante: dans la mémoire 11, deux octets par ligne sont consacrés à la configuration »modem-entrée« et à la commande »modem-entrée«. L'octet de commande est généré par le code de commande pour que le dispositif de balayage sache comment traiter les changements des données »modem-entrée«.

. Configuration »modem-entrée« bits 0 à 5

Suivant le multiplet de commande (masque) tous les bits de la configuration peuvent être contrôlés pour trouver si un changement s'est produit, mais seuls les trois premiers ont un effet sur le fonctionnement du dispositif 7, ce sont:

Bit  0        Poste de données prêt
Bit  1        Prêt à émettre
Bit  2        Indicateur de tonalité
Bits 3 et 4   Sont transparents pour le dispositif 7
Bit  5        Bit de la ligne réception, il est donné au code comme indicateur lorsqu'un changement se produit. Généralement ce bit est masqué par le code.

. Commande »modem-entrée« bits 8 à 13

Dans le dispositif logique 24, les données »modem-entrée« entrantes doivent être comparées avec la configuration précédemment emmagasinée pour détecter tout changement. Le microcode peut commander une comparaison de bits sélectivement en chargeant une configuration de masquage dans les bits 8 à 13. Cette configuration subit une opération ET avec les six premiers bits des données »modem-entrée«.

Lorsqu'un changement est détecté, il est signalé au microprocesseur.

Le traitement des données »modem sortie« se fait de la façon suivante:

Dans la mémoire 11 trois octets sont alloués par ligne aux configurations »modem-sortie«.

. Deux octets de configurations »Modem-sortie« (empilée/immédiate)

Ces deux configurations sont transférées aux circuits LIC, 22 appropriés sans modification par le dispositif 7. Elles sont données par le code de commande en utilisant le chemin asynchrone, 9, 10, registres externes 8.

9

. Demande Service »Modem-sortie« bits 6 et 7 des configurations

Lorsqu'ils sont à zéro, ces bits font que le dispositif logique 24 provoque l'envoi de la configuration »modem-sortie« à la ligne adressée. Ces commandes sont établies par le microcode en utilisant le chemin asynchrone après le chargement de la configuration »modem-sortie« par le même chemin.

La différence entre les deux commandes est que le dispositif logique 24 provoque l'envoi de la configuration »modem-sortie« immédiate dès que la ligne est balayée et de la configuration »modem-sortie« empilée uniquement sur demande du microcode à la fin de l'envori d'un bloc de données s'il est demandé dans les paramètres associés.

. Un octet, masque de vérification des circuits d'attaque

En positionnant de façon appropriée les bits de ce masque on inhibe la vérification de certains circuits d'attaque.

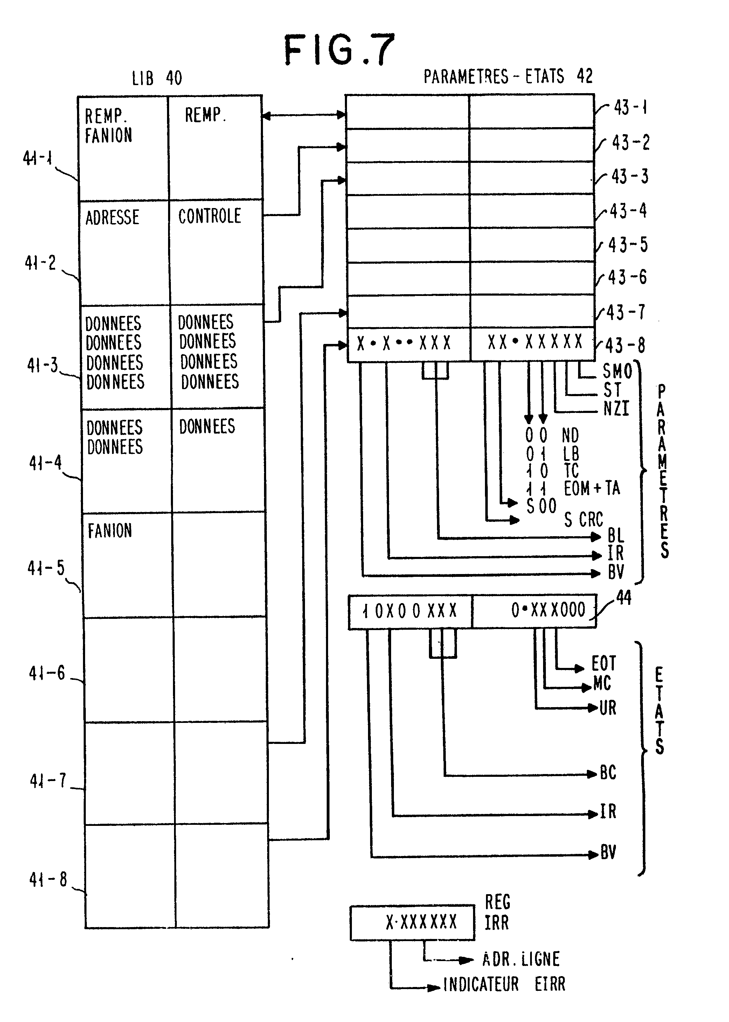

On va maintenant décrire à titre d'exemple comment se passe une opération de transmission sur une ligne. Dans l'exemple choisi, le mode de transmission sur la ligne est le mode SDLC. On pourra se référer à la figure 7 sur laquelle sont représentés les contenus de la zone LIB 40 associée et de la zone »Paramètres-états« 42. Les mêmes références que sur la figure 4 ont été reprises.

A la ligne sur laquelle l'opération doit avoir lieu, est affectée une zone LIB, utilisée comme mémoire-tampon entre les unités de traitement centrales et le dispositif de balayage 7.

A chaque bloc de la zone LIB est associé un champ dans la zone Paramètre-état, comme on l'a décrit précédemment en référence à la figure 4. Ce champ est utilisé en transmission pour donner de l'information au dispositif 7. Les informations de paramètres sont remplacées par des informations d'état fournies par le dispositif de balayage après la fin de la transmission du bloc.

Le champ paramètre comporte 16 bits, fournissant les indicateurs représentés sur la figure 7 dans la dernière zone 43-8, indicateurs qui ont la signification suivante:

Bit 0     BV (bloc valide) lorsqu'il est à zéro il informe le dispositif de balayage que le bloc de champ paramètre correspondant est prêt à être traité par le dispositif de balayage pour une transmission de données.
(1: bloc est vide, 0: bloc est plein).

Bit 2     IR (interruption demandée) lorsque le dispositif de balayage a transmis le bloc il demande une interruption au microprocesseur avec l'indicateur IR = 1 dans le champ d'état correspondant.

Bits 5, 6, 7     BL (longueur du bloc) indique le nombre de caractères défini dans le bloc qui sont à transmettre sur la ligne (1 à 8 octets).

Bit 8     S CRC (envoyer CRC) envoyer les deux caractères FCS (FCS = Frame Check Sequence) après avoir envoyé les données du bloc impliqué.

Bit 9     S O O (commencer sur multiplet impair) le premier octet du bloc n'est pas transmis sur la ligne.

Bits 11 et 12     ND (données normales si 00)
LB (dernier bloc si 01)
dernier bloc à transmettre. Après la fin de la transmission, cet indicateur fera que le dispositif de balayage 7 fait une demande d'interruption pour informer le microprocesseur que le message a été envoyé (information d'état, bit EOT) (fin de transmission) mis à 1.
TC (transmission continue)
continuer à transmettre les caractères définis dans ce bloc si 10
EOM + TA (fin de message + bouclage).

Bit 13     NZI (pas d'insertion de zéro) supprimer l'insertion du bit zéro après 5 bits 1 consécutifs envoyés sur la ligne: utiliser pour envoyer les fanions et caractères de remplissage. Lorsque ce bit est à 1, le CRC n'est pas accumulé.

Bit 14     ST (démarrage dispositif de comptage de temps) actionne un dispositif de comptage de temps dans le dispositif 7. A la fin du temps, une interruption est demandée au microprocesseur.

Bit 15     SMO (envoyer modem-sortie) l'information »modem-sortie« empilée est envoyée dans le registre 66 du circuit LIC correspondant à la fin de la transmission du bloc.

Le champ d'état représenté en 44 sur la figure 7 contient les indicateurs associés à l'achèvement de la transmission d'un bloc:

Bit 0     BV (bloc valide)
Bit 3     IR est à 1 lorsque IR dans le champ de paramètre était à 1.
Bits 5, 6, 7     BC, indique le nombre de caractères qui ont été transmis de ce bloc (1 à 8 octets).

Bit 10     UR (manque de caractère) est à un lorsque le dispositif de balayage vient transmettre le bloc correspondant mais trouve l'indicateur BV à 1.

Bit 11     MC (changement modem) un changement de l'état des fils du modem s'est produit pendant la transmission du caractère.

Bit 12     EOT (fin de transmission) est à 1 lorsque l'indicateur LB (dernier bloc) était à 1 dans le champ paramètre.

Le registre externe IRR de demande d'interruption contient:

l'indicateur EIRR et
l'adresse de la ligne.

— Debut d'une trame

Le début de toutes les trames SDLC est construit par le code de commande de la manière suivante:
Le premier bloc 41-1 est remple en fonction des paramètres d'initialisation par exemple caractère de remplissage (remp.)/caractère de remplissage (remp.)/fanion.
Le champ paramètre correspondant 43-1 est établi:

.     bloc valide indicateur BV à zéro
.     longueur de bloc indicateur BL indique le nombre de caractères de remplissage et de fanions dans le bloc
.     indicateur NZI à 1

Le second bloc, bloc 41-2 est rempli avec les caractères d'adresse et de contrôle donnés dans les paramètres de la commande d'émission envoyés par les unités de traitement centrales.
Le champ paramètre correspondant 43-2 est établi:

.     indicateur BV à zéro
.     indicateur BL

— Données a l'interieur d'une trame

Si la trame ne contient pas de données, aller à FIN DE TRAME.
Le code de commande transfère seize multiplets de données des unités centrales de traitement dans les troisième et quatrième blocs.
Les champs paramètres correspondants sont établis:

.     BV à zéro
.     BL indique le nombre de multiplets

Les deux blocs suivants sont remplis. Données champs paramètres sont établies de la même façon et ceci est réalisé jusqu'à ce que tous les blocs soient pleins. S'il reste encore des données à transmettre, l'indicateur IR »demande d'interruption« est mis à 1, à la fin d'un bloc sur deux, bloc 41-2, 41-4, 41-6, 41-8. Lorsque les blocs sont pleins de données prêtes à transmettre, le code de commande initie une opération de sortie asynchrone »SORTIE EMISSION« au dispositif de balayage.
Ensuite le dispositif de balayage effectue une opération en vol de cycle pour obtenir le champ paramètre associé au bloc à transmettre. Les octets de données sont ensuite transférés des blocs à la mémoire 11.
Une fois que deux blocs ont été transmis sur la ligne, le dispositif de balayage fait une demande d'interruption au microprocesseur. Le résultat de l'opération de transmission de bloc est mis dans le champ »état« et remplace les paramètres précédents. Ensuite le code de commande:

.     effectue une vérification dans le champ d'état. L'indicateur BV a été mis à un par le dispositif de balayage,
.     la ligne identifiée dans le registre IRR est mise en file d'attente afin que seize octets de données supplémentaires puissent être amenés dans les deux blocs qui ont été vidés.
.     une fois que ces deux blocs sont de nouveau remplis, si les deux blocs suivants sont libres (BV = 1) le code de commande provoque le transfert de seize octets pour les remplir afin de maintenir les blocs toujours remplis avec le maximum de données.

— Fin de trame

La fin de tous les messages SDLC est construite par le code de commande de la manière suivante:

— mettre indicateur SCRC (envoyer CRC) du dernier bloc rempli.
— le bloc suivant est rempli avec des fanions et des caractères de remplissage suivant les paramètres du mode d'initialisation,
— le champ paramètre correspondant est établi:

. BV = 0
. BL = nombre de fanions et de caractères de remplissage dans le bloc,
. NZI = 1
. TC = 10 si nécessaire
ou:
. indicateur EOM = 01,
provoquera une interruption par le dispositif de balayage au microprocesseur une fois que le message a été transmis. Le code de commande en réponse prendra les actions nécessaires, soit renverra à l'unité de commande centrale (CCU) l'information d'état de fin de l'opération de transmission, soit attendra la réponse demandée de la ligne si la ligne était unidirectionnelle, (indicateur EOM = 11), avant de demander une interruption à l'unité de commande (CCU) pour la ligne concernée.


Interruption demandée par le dispositif de balayage

. Indicateur IR = 1
. Changement sur les fils du modem
. Manque de caractères
. Fin de message
. Expiration du temps
. Erreur de matériel


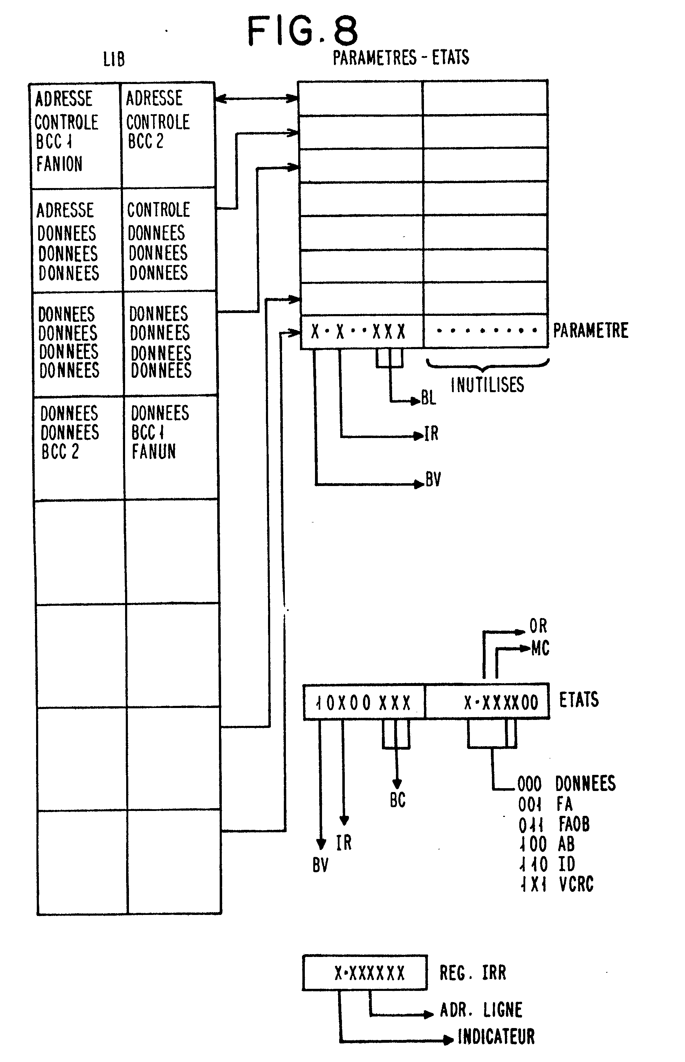

En référence à la figure 8 on va décrire l'operation de réception des données SDLC. Les données sont donc reçues par une ligne 20-a et envoyées dans la mémoire 11 et ensuite elles doivent être transférées par vol de cycle dans une zone mémoire LIB correspondante.

Les champs paramètres de commande dans l'operation de réception doivent être intitialisés avec les informations suivantes:

— indicateur BV         (1: bloc plein, 0: bloc vide)
— indicateur IR         mis à 1, tous les deux blocs
— indicateur BL         nombre d'octets que le dispositif de balayage placera dans chaque bloc.

Le champ état contient les indicateurs suivants:

Indicateur BV     mis à 1 par le dispositif de balayage, mis à 0 par le code de commande.

Lorsqu'il est à 1:

— indique au code de commande que le bloc contient des données à traiter,
— indiquer au dispositif de balayage que les données contenues dans ce bloc ne sont pas encore traitées, le dispositif de balayage ne peut plus amener des données, la condition »trop de caractères« est reportée, le reste des données reçues est chassé.

Lorsqu'il est à 0:

— indique au code de commande qu'aucune donnée n'est encore disponible dans ce bloc.
— indique au dispositif de balayage que le bloc est disponible pour recevoir les données.

Indicateur OR     »trop de caractères« mis à 1 lorsque le dispositif de balayage veut remplir un bloc et que BV est encore à 1.

Indicateur IR     mis à 1 si exigé par le paramètre

**0 048 781**

- BC      nombre d'octets dans le bloc
- FA      fanion de fin a été détecté sur la ligne
- FA O B   (limite fanion mal cadré), un fanion mal cadré a été détecté sur la ligne
- AB      (abandon), la condition AB a été détectée sur la ligne
- ID       (état inactif), la condition ID a été détectée
- V CRC   (vérification CRC): le CRC calculé par le dispositif de balayage n'est pas correct
- MC     (changement modem): l'état des fils de contrôle a changé pour cette ligne pendant la réception.

### Debut d'une trame

Le code de commande initie une opération asynchrone de réception vers le dispositif de balayage. Après détection d'un premier fanion par le dispositif de balayage, les caractères qui ne sont pas des fanions additionnels commencent à remplir par vol de cycle le premier bloc disponible.

### Données dans une trame

Si la trame ne contient pas de données caractères Adresse et Contrôle seulement, passer à FIN de TRAME. Dans le cas contraire le code de commande réalise les opérations suivantes:

- Les caractères suivants reçus dans le même bloc et dans les blocs suivants sont des données qui doivent être transférées à l'unité de traitement centrale par seize octets.
- L'indicateur IR fera que le code de commande met en file d'attente la ligne identifiée dans le registre IRR, dans la file d'attente des opérations en vol de cycle afin d'envoyer ces données vers l'unité de commande centrale (CCU).
- Lorsque deux blocs de données ont été transférés à l'unité de commande centrale, le code de commande remet à zéro l'indicateur BV de commande dans le champ paramètre associé. Ce bit est mis à 1 par le dispositif de balayage lorsque le bloc et le champ d'état sont remplis par les données et de l'information de commande.
- Les deux blocs suivants sont remplis avec des données (BV = 1 → mettre en file d'attente l'adresse de la ligne).

### Fin de trame

A la fin d'une trame (Fanion dans le bloc état) une fois que toutes les données ont été envoyées, l'information d'état de fin est envoyée à l'unité de commande centrale (CCU) et ensuite une interruption est demandée à l'unité de commande CCU pour la ligne concernée. A ce moment, les blocs peuvent déjà contenir d'autres trames reçues attendant d'autres commandes de l'unité de commande centrale.

### Interruption

Le dispositif de balayage demande une interruption au microprocesseur:

- A la détection d'une fin de trame (Fanion, abandon, état inactif),
- A un changement d'état des fils du modem,
- Trop de caractères,
- Fin du temps,
- Interruption demandée dans le champ paramètre,
- Erreur de matériel.

**Revendications**

1. Adaptateur de lignes de communications destiné à un contrôleur de communications contrôlant l'échange de données entre au moins une unité de traitement centrale et des terminaux connectés auxdites lignes sous contrôle d'une unité de commande centrale reliée à un bus commun auquel l'adaptateur est attaché par un bus d'entrée/sortie, ledit adaptateur pouvant desservir un certain nombre de lignes de transmission au moyen d'un dispositif de balayage cyclique, et d'un ensemble de mémoires à accès aléatoire, caractérisé en ce qu'il comprend:
des premiers moyens comprenant un microprocesseur (1) et une mémoire de commande (2) pour

0 048 781

emmagasiner des données et le code de commande du microprocesseur,
des seconds moyens constitués par ledit dispositif de balayage cyclique (7) comprenant un ensemble de registres externes (8) et ladite mémoire à accès aléatoire (11) qui peut être adressée au moyen d'un dispositif de sélection d'adresses, (13) une zone de ladite mémoire étant affectée à chaque ligne de communication afin d'emmagasiner temporairement les données à échanger entre l'unité de traitement centrale et les terminaux et des paramètres d'initialisation et de commande,
des troisièmes moyens d'interface comportant trois trajets d'échange entre les premiers et seconds moyens, ces trajets incluant
un premier trajet d'entrée/sortie comprenant un premier bus (10) connectant le microprocesseur à l'ensemble de registres externes (8), un second bus (14) connectant l'ensemble de registres externes (8) et la mémoire à accès aléatoire (11) et une ligne d'adressage connectant l'ensemble de registres externes au dispositif de sélection d'adresses (13), ce premier trajet permettant que les zones de la mémoire à accès aléatoire (11) soient adressées par le microprocesseur (1) et que les paramètres d'initialisation et de commande soient transférés de la mémoire de commande du microprocesseur (1) dans les zones (11) adressées sous contrôle du microprocesseur (1),
un second trajet comprenant le second bus (14) connectant la mémoire à accès aléatoire (11) à un des registres externes (8) de l'ensemble, permettant à des demandes d'interruptions d'être envoyées au microprocesseur par les second moyens par l'intermédiaire d'un chemin d'interruption (18),
un troisième trajet comprenant un bus d'échange (16) reliant la mémoire à accès aléatoire (11) à la mémoire de commande du microprocesseur et un chemin (17) pour l'adressage de la mémoire de commande, reliant la mémoire à accès aléatoire (11) à la mémoire de commande (2), pour que sous contrôle du dispositif de sélection d'adresses (13), adressant séquentiellement les zones de la mémoire à accès aléatoire (11) les informations soient échangées par des opérations de vol de cycle entre les deux mémoires (2, 11) sans intervention du microcode.

2. Adaptateur selon la revendication 1 caractérisé en ce que les paramètres d'initialisation sont représentés par des configurations de bits caractérisant la nature des données et le protocole d'échange sur les lignes de communications.

3. Adaptateur selon la revendication 2, caractérisé en ce que l'ensemble de registres externes (8) dans les seconds moyens comprend au moins quatre registres utilisés en connexion avec le premier trajet (10), un premier registre (8-1) étant chargé par le microprocesseur (1) avec l'adresse d'une ligne, un second registre (8-2) étant chargé par le microprocesseur avec l'adresse de la zone de la mémoire à accès aléatoire affectée à cette ligne, un troisième registre (8-3) étant chargé avec les paramètres d'initialisation de la ligne et un quatrième registre (8-4) étant chargé avec des données de contrôle de l'échange, les contenus des premier (8-1) et second (8-2) registres étant utilisés par le dispositif de sélection d'adresses (13) pour l'adressage d'une zone de la mémoire à accès aléatoire (11) et le contenu du troisième registre (8-3) étant transféré à la zone adressée par le second bus (14) du premier trajet pendant une phase d'initialisation, cette opération étant réalisée pour chacune des lignes afin de personnaliser les zones de la mémoire à accès aléatoire (11) conformément à la nature des données et du protocole d'échange sur les lignes affectées aux zones.

4. Adaptateur selon la revendication 3 caractérisé en ce que la partie de la mémoire de commande (2) du microprocesseur affectée à l'emmagasinage des données est organisée en zones de mémoires, deux zones étant affectées à une ligne, la première (LIB 40) servant à emmagasiner temporairement les informations à envoyer à ou reçues de la mémoire à accès aléatoire et la seconde (42) servant à emmagasiner des paramètres de commande et informations d'état.

5. Adaptateur selon la revendication 4 caractérisé en ce que chaque zone de stockage d'information (LIB) dans la mémoire de commande est affectée à chaque ligne, pendant la phase d'initialisation, par le microprocesseur, en écrivant dans le troisième registre (8-3) une adresse de départ qui est écrite dans la mémoire à accès aléatoire (11).

6. Adaptateur selon la revendication 4 ou 5 caractérisé en ce que chaque zone d'emmagasinage d'information est divisée en blocs comportant huit octets d'information (41-1 à 41-8), un champ de »paramètre-information d'état« étant affecté à chaque bloc dans la zone (42) de paramètres et d'information d'état.

7. Adaptateur selon la revendication 4, 5 ou 6 caractérisé en ce que les paramètres de commande pour une ligne d'émission contiennent des informations caractérisant le contenu d'information dans le bloc associé, et pour une ligne de réception ils contiennent des informations caractérisant les informations à mettre dans le bloc associé.

8. Adaptateur selon la revendication 7 caractérisé en ce que les informations d'états remplaceront les paramètres à la fin d'une operation d'émission ou de réception pour indiquer comment ladite opération s'est déroulée.

9. Adaptateur selon l'une quelconque des revendications précédentes caractérisé en ce que les terminaux sont connectés aux seconds moyens (7) par au moins un circuit d'interface de ligne servant d'interface entre un certain nombre de lignes et l'adaptateur, chaque circuit comprenant des circuits d'attaque (63) connecté aux lignes d'émission pour le transfert des données entre l'unité de traitement centrale et les terminaux et des circuits de réception (60) connectés aux lignes de réception utilisés pour le transfert des données entre les terminaux et l'unité de traitement centrale, et un registre

14

associé à chaque ligne, le registre (62) associé à une ligne d'émission recevant l'information à transmettre par le circuit de commande de la mémoire à accès aléatoire par un bus d'échange (23) et le registre (61) associé à une ligne de réception recevant l'information du circuit de réception pour l'envoyer à la mémoire à accès aléatoire par le bus d'échange.

10. Adaptateur selon la revendication 9 caractérisée en ce que les terminaux sont connectés aux circuits d'interface de ligne par des modems (21) les circuits d'interface de lignes comprenant au moins un registre modem-entrée (65) pour recevoir les informations sur les fils de contrôle associés à une ligne de réception et un registre modem-sortie (66) pour emmagasiner l'information à envoyer sur les fils de contrôle associés à une ligne de transmission ces registres étant adressables par le microprocesseur (1) par l'ensemble de registres externes (8) contrôlant le dispositif de sélection d'adresse (13) et échangeant leurs contenus avec les zones de la mémoire à accès aléatoire affectés aux dites lignes, par le bus d'échange (23) pour assurer la fonction de gestion des fils de contrôle.

## Patentansprüche

1. Leitungssteuerung für einen Vorschaltrechner für die Kontrolle des Datenaustausches zwischen mindestens einer zentralen Datenverarbeitungseinheit und an die besagten Leitungen angeschlossenen Terminals unter Kontrolle einer zentralen Steuereinheit, die mit einem gemeinsamen Bus verbunden ist, an welchen der Adapter durch einen Eingangs-Ausgangs-Bus angeschlossen ist, wobei der besagte Adapter eine gewisse Anzahl Übertragungsleitungen mit Hilfe einer Vorrichtung zyklischer Abtastung versorgen kann, und eine Speichereinheit mit stochastischem Zugriff, dadurch gekennzeichnet, daß sie umfaßt:
erste Mittel mit einem Mikroprozessor (1) und einem Steuerspeicher (2) für die Aufnahme der Daten und des Steuerkode des Mikroprozessors,
zweite Mittel, bestehend aus der besagten zyklischen Abtastvorrichtung mit einer Einheit externer Register (8) und dem besagten Speicher mit stochastischem Zugriff (11), adressierbar über eine Adressenwahlvorrichtung (13), wobei jeder Kommunikationsleitung eine Zone des besagten Speichers zugeordnet ist, um vorübergehend die zwischen der zentralen Verarbeitungseinheit und den Terminals auszutauschenden Daten sowie die Initialisierungs- und Steuerparameter zu speichern,
dritte Schnittstellenmittel mit drei Austauschwegen zwischen den ersten und den zweiten Mitteln, wobei diese Wege enthalten:
einen ersten Ein-/Ausgangsweg mit einem ersten Bus (10), der den Mikroprozessor an die Gesamtheit der externen Register (8) anschließt, einem zweiten Bus (14), der die Gesamtheit der externen Register (8) und den Speicher mit stochastischem Zugriff (11) verbindet und eine Adressierleitung, welche die Gesamtheit der externen Register mit der Adresswahlvorrichtung (13) verbindet, wobei dieser erste Weg gestattet, daß die Speicherzonen mit stochastischem Zugriff (11) durch den Mikroprozessor (1) adressiert werden und daß die Initialisierungs- und Steuerparameter aus dem Steuerspeicher des Mikroprozessors (2) in die unter Kontrolle des Mikroprozessors (1) adressierten Zonen (11) übertragen werden,
einen zweiten Weg, der den zweiten Bus (14) umfaßt, welcher den Speicher mit stochastischem Zugriff (11) mit einem der externen Register (8) der Einheit verbindet, wodurch ermöglicht wird, daß Unterbrechungsfragen durch die zweiten Mittel mit Hilfe eines Unterbrechungsweges (18) an den Mikroprozessor gesandt werden,
einen dritten Weg, der einen Austauschbus (16) enthält, welcher den Speicher mit stochastischem Zugriff (11) mit dem Steuerspeicher des Mikroprozessors verbindet, und einen Weg (17) zum Adressieren des Steuerspeichers, der den Speicher mit stochastischem Zugriff (11) mit dem Steuerspeicher (2) verbindet, damit unter Kontrolle der Adresswahlvorrichtung, welche sequenziell die Speicherzonen mit stochastischem Zugriff (11) adressiert, die Informationen durch Zyklusüberflugvorgänge zwischen den beiden Speichern (2, 11) ohne Eingriff des Mikrokode ausgewechselt werden.
2. Adapter gemäß Anspruch 1, dadurch gekennzeichnet, daß die Initialisierungsparameter durch Bit-Konfigurationen dargestellt sind, welche die Art der Daten und das Austauschprotokoll aus den Kommunikationsleitungen kennzeichnen.
3. Adapter gemäß Anspruch 2, dadurch gekennzeichnet, daß die Gesamtheit der externen Register (8) in den zweiten Mitteln mindestens vier Register enthält, welche in Verbindung mit dem ersten Weg (10) verwendet werden, wobei ein erstes Register (8-1) durch den Mikroprozessor (1) mit der Adresse einer Leitung geladen wird, ein zweites Register (8-2) durch den Mikroprozessor mit der Adresse der Speicherzone mit stochastischem Zugriff geladen wird, die dieser Leitung zugeordnet ist, ein drittes Register (8-3) mit den Initialisierungsparametern der Leitung und ein viertes Register (8-4) mit den Daten für die Kontrolle des Austauschs, während der Inhalt des ersten (8-1) und zweiten (8-2) Registers von der Adreßauswahlvorrichtung (13) für die Adressierung einer Speicherzone mit stochastischem Zugriff (11) verwendet wird, und der Inhalt des dritten Registers (8-3) an die adressierte Zone durch den zweiten Bus (14) des ersten Weges während einer Initialisierungsphase übertragen wird, wobei dieser Vorgang für jede der Leitungen ausgeführt wird, um die Speicherzonen mit stochastischem Zugriff (11) gemäß der Art der Daten und dem Austauschprotokoll an den den Zonen zugeordneten Leitungen zu kennzeichnen.

4. Adapter gemäß Anspruch 3, dadurch gekennzeichnet, daß der Teil des Steuerspeichers (2) des Mikroprozessors, der für die Speicherung der Daten vorgesehen ist, in Speicherzonen eingeteilt ist, von denen zwei einer Leitung zugeordnet sind, und die erste (LIB 40) dafür verwendet wird, vorübergehend die an den Speicher mit stochastischem Zugriff zu sendenden oder von ihm zu empfangenden Informationen zu speichern und die zweite (42) dazu verwendet wird, die Steuerparameter und Zustandsinformationen zu speichern.

5. Adapter gemäß Anspruch 4, dadurch gekennzeichnet, daß jede Informationsspeicherzone (LIB) im Steuerspeicher während der Initialisierungsphase durch den Mikroprozessor einer Leitung zugeordnet ist, durch Schreiben einer Ausgangsadresse in das dritte Register (8-3), das in den Speicher mit stochastischem Zugriff (11) geschrieben wird.

6. Adapter gemäß Anspruch 4 oder 5, dadurch gekennzeichnet, daß jede Informationsspeicherzone in Blöcke unterteilt ist, die acht Informationsbyte enthalten (41-1 bis 41-8), während ein Feld »Zustandsinformationsparameter« einem jeden Block in der Parameter- und Informationszone (42) zugeordnet ist.

7. Adapter gemäß Anspruch 4, 5 oder 6, dadurch gekennzeichnet, daß die Steuerparameter für eine Sendeleitung Informationen, welche den Informationsinhalt im zugeordneten Block kennzeichnen, und für eine Empfangsleitung Informationen, welche die Informationen kennzeichnen, die in den zugeordneten Block zu bringen sind, enthalten.

8. Adapter gemäß Anspruch 7, dadurch gekennzeichnet, daß die Zustandsinformationen die Parameter am Ende eines Sende- oder Empfangsvorgangs ersetzen, um anzuzeigen, wie der besagte Vorgang abgelaufen ist.

9. Adapter nach irgendeinem der vorangehenden Ansprüche, dadurch gekennzeichnet, daß die Terminals mit den zweiten Mitteln (7) durch mindestens eine Leitungsschnittstellenschaltung verbunden sind, die als Schnittstelle zwischen einer gewissen Anzahl Leitungen und dem Adapter dient, wobei jede Schaltung Ansteuerschaltungen (63) enthält, die an die Sendeleitungen für den Transfer der Daten zwischen der zentralen Verarbeitungseinheit und den Terminals angeschlossen sind, und Empfangsschaltungen (60), die an den für den Transfer der Daten zwischen den Terminals und der zentralen Verarbeitungseinheit verwendeten Empfangsleitungen angeschlossen sind, während das einer Sendeleitung zugeordnete Register (62) die vom Steuerkreis des Speichers mit stochastischem Zugriff über einen Austauschbus (23) zu übertragende Information empfängt, und das Register (61) einer Empfangsleitung zugeordnet ist, welche die Information der Empfangsschaltung empfängt, um sie über den Austauschbus an den Speicher mit stochastischem Zugriff zu senden.

10. Adapter gemäß Anspruch 9, dadurch gekennzeichnet, daß die Terminals durch Modems (21) an die Leitungsschnittstellenschaltungen angeschlossen sind, wobei die Leitungsschnittstellen mindestens ein Modem-Eingangsregister (65) enthalten, um die Informationen an den Kontrolldrähten zu empfangen, die einer Empfangsleitung zugeordnet sind, und ein Modemausgangsregister (66), um die Information zu speichern, die an die Kontrolldrähte auszusenden ist, welche einer Übertragungsleitung zugeordnet sind, und die Register durch den Mikroprozessor (1) durch die Gesamtheit der externen Register adressiert werden können, welche die Adreßauswahlvorrichtung (13) steuert und durch den Austauschbus (23) ihren Inhalt mit den Zonen des Speichers mit stochastischem Zugriff auswechselt, die den besagten Leitungen zugeordnet sind, um die Funktion der Verwaltung der Kontrolldrähte wahrzunehmen.

## Claims

1. A communication line adapter for use with a communications controller which controls the exchange of data between at least one central processing unit and terminals attached to said lines through a central control unit connected to a common bus to which the adapter is attached through an input/output bus, said adapter being capable of serving a number of transmission lines by means of a cyclic scanning device and an assembly of random access memories, characterized in that it includes:

first means comprising a microprocessor (1) and a control memory (2) for storing data and the control code of the microprocessor,

second means (7) comprised of said cyclic scanning device and including an assembly of external registers (8) and said random access memory (11) which can be addressed by means of an address selection device (13), one zone of said random access memory being assigned to each communication line in order to store temporarily the data to be exchanged between the central processing unit and the terminals as well as initiating and control parameters,

third interface means comprising three exchange paths between the first and second means, said paths including:

a first input/output path comprising a first bus (10) connecting the microprocessor to the external register assembly (8), a second bus (14) comecting the external register assembly (8) and the random access memory (11) and an addressing line connecting the external register assembly to the address selection divice (13), said first path allowing the zones of the random access memory (11) to be addressed by the microprocessor (1) and the initiating and control parameters to be transferred from the control memory of the microprocessor (1) into the addressed zones of the random access memory under control of the microprocessor (1),

a second path comprising the second bus (14) which connects the random access memory (11) to one of the registers of said external register assembly (8), to permit interrupt requests to be sent to the microprocessor from said second means over an interrupt path (18),

a third path, comprising an exchange path (16) connecting the random access memory (11) to the control memory of the microprocessor and a path (17) for addressing the control memory and connecting the random access memory (11) to the control memory (2) to permit information to be exchanged through cycle steal operations, under the control of the address selection device (13) which sequentially addresses the zones of the random access memory (11), between the two memories (2, 11), no use of the microcode being required.

2. An adapter according to claim 1, characterized in that the initiating parameters are represented by bit patterns specifying the nature of the data and the exchange protocol on the communication lines.

3. An adapter according to claim 2, characterized in that the assembly of external registers (8), in said second means includes at least four registers to be used in connection with the first path (10), a first register (8-1) being loaded by the microprocessor (1) with the address of a line, a second register (8-2) being loaded by the microprocessor with the address of the random access memory zone assigned to said line, a third register (8-3) being loaded with the initiating parameters of the line and a fourth register (8-4) being loaded with exchange control data; the contents of the first (8-1) and second (8-2) registers being utilized by the address selection device (13) for addressing a zone or the random access memory (11) and the contents of the third register (8-3) being transferred to the addressed zone through the second bus (14) of the first path during an initiating phase, this operation being performed for every line to identify the random access memory zones according to the nature of the data and the exchange protocol on the lines assigned to said zones.

4. An adapter according to claim 3, characterized in that the information-storing portion of the control memory (2) of the processor is split into memory zones, two zones being assigned to a line, the first zone (LIB 40) storing temporarilly the information to be transferred to, or received from, the random access memory, and the second zone (42) storing status information and control parameters.

5. An adapter according to claim 4, characterized in that each information storing zone (LIB) in the control memory is assigned to a line, during the initiating phase, through the microprocessor, by writing into the third register (8-3) a start address which is written in the random access memory (11).

6. An adapter according to claim 4 or 5, characterized in that each information storing zone is split into eight-byte bursts (41-1 to 41-8), a »parameter-status information« field being assigned to each burst in the status information and parameter zone (42).

7. An adapter according to claim 4 or 5 or 6, characterized in that the control parameters for a transmitting line contain information which is the characteristic of the information contained in the associated burst and in that the parameters for a receiving line contain information which is the characteristic of the information to be inserted into the associated burst.

8. An adapter according to claim 7, characterized in that the status information will replace the parameters at the end of a transmission or reception operation in order to indicate the result of said operation.

9. An adapter according to any one of the preceding claims, characterized in that the terminals are connected to the second means (7) through at least one line interfacing circuit acting as the interface between a number of lines and the adapter, each circuit comprising drive circuits (63) connected to the transmitting lines to transfer data between the central processing unit and the terminals, and reception circuits (60) connected to the receiving lines to transfer data between the terminals and the central processing unit, and a register associated with each line, the register (62) associated with a transmitting line receiving the information to be transmitted by the drive circuit of the random access memory through an exchange bus (23) and the register (61) associated with a receiving line receiving the information from the reception circuit in order to transmit it to the random access memory through the exchange bus.

10. An adapter according to claim 9, characterized in that the terminals are connected to the line interfacing circuits through modems (21), said line interfacing circuits including at least one »modem-in« register (65) for receiving the information on the control leads associated with a receiving line and on the receiving line, and a »modem-out« register (66) for storing the information to be sent over the control leads associated with a transmitting line, said registers being addressable by the microprocessor (1) through the assembly of external registers (8) controlling the address selection device (13) and exchanging their contents with the random access memory zones assigned to said lines, through the exchange bus (23), for performing the control lead management function.

# FIG.1

FIG. 2

FIG. 3

LIB  40

BLOC
41-1

43-1

43-8

42

PARAMETRES — ETATS

# FIG.4

18

IRR          EIRR

8-5          8-6

14

# FIG.5

# FIG.6

VERS 7 - BUS 23

DE 7 - BUS 23

61

REG

62

12'

65

R

T

12'

66

60

60-6    60-1

63

63-1

FILS DE
CONTROLE
64 C

20-a

20-b

67

MODEM 21

# FIG.7

0 048 781

# FIG. 8

LIB PARAMETRES - ETATS

PARAMETRE

INUTILISES

BL

IR

BV

OR
MC

ETATS

000 DONNEES
001 FA
011 FAOB
100 AB
110 ID
1X1 VCRC

BC

IR

BV

X·XXXXXX REG. IRR

ADR. LIGNE

INDICATEUR

31